(19) Europäisches Patentamt
European Patent Office
Office européen des brevets

(11) **EP 3 656 078 B1**

(12) **EUROPEAN PATENT SPECIFICATION**

(45) Date of publication and mention of the grant of the patent:
**07.12.2022 Bulletin 2022/49**

(21) Application number: **17793849.5**

(22) Date of filing: **13.10.2017**

(51) International Patent Classification (IPC):
**H04L 9/08** (2006.01)

(52) Cooperative Patent Classification (CPC):
**H04L 9/0852**

(86) International application number:
**PCT/EP2017/076170**

(87) International publication number:
**WO 2019/072396 (18.04.2019 Gazette 2019/16)**

(54) **HETERODYNE RECEIVER AND RECEIVING METHOD**

**HETERODYNEMPFÄNGER UND EMPFANGSVERFAHREN**

**RÉCEPTEUR HÉTÉRODYNE ET PROCÉDÉ DE RÉCEPTION**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.05.2020 Bulletin 2020/22**

(73) Proprietor: **Huawei Technologies Duesseldorf GmbH**
**40549 Düsseldorf (DE)**

(72) Inventors:
- **FUNG, Fred, Chi, Hang**
  **80992 Munich (DE)**
- **BRUNNER, Hans**
  **80992 Munich (DE)**
- **WANG, Dawei**
  **80992 Munich (DE)**
- **HILLERKUSS, David**
  **80992 Munich (DE)**

(74) Representative: **Pfenning, Meinig & Partner mbB Patent- und Rechtsanwälte**
**Theresienhöhe 11a**
**80339 München (DE)**

(56) References cited:
**EP-A1- 3 244 566**

- **BING QI ET AL: "Generating the Local Oscillator "Locally" in Continuous-Variable Quantum Key Distribution Based on Coherent Detection", PHYSICAL REVIEW X, vol. 5, no. 4, 1 October 2015 (2015-10-01) , XP055316967, DOI: 10.1103/PhysRevX.5.041009**
- **ADRIEN MARIE ET AL: "Self-coherent phase reference sharing for continuous-variable quantum key distribution", ARXIV.ORG, CORNELL UNIVERSITY LIBRARY, 201 OLIN LIBRARY CORNELL UNIVERSITY ITHACA, NY 14853, 12 May 2016 (2016-05-12), XP080700983,**
- **"Quantum Key Distribution (QKD); Components and Internal Interfaces", ETSI DRAFT SPECIFICATION; QKD 003, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG QKD Quantum Key Distribution, no. V0.0.3 4 June 2017 (2017-06-04), pages 1-49, XP014303537, Retrieved from the Internet: URL:docbox.etsi.org/ISG/QKD/70-Drafts/0003 ed2/QKD-003ed2v003.pdf [retrieved on 2017-06-04]**
- **FABIAN LAUDENBACH ET AL: "Continuous-Variable Quantum Key Distribution with Gaussian Modulation -- The Theory of Practical Implementations", ARXIV.ORG, CORNELL UNIVERSITY LIBRARY, 201 OLIN LIBRARY CORNELL UNIVERSITY ITHACA, NY 14853, 27 March 2017 (2017-03-27), XP080755879,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a heterodyne receiver and to a corresponding receiving method. In particular, the heterodyne receiver and method are configured to perform Continuous-Variable Quantum Key Distribution (CV-QKD), and are thus for receiving a CV-QKD signal. The heterodyne receiver and method are proposed as countermeasures for a previously unknown security leak, which is present in the conventional CV-QKD procedure with heterodyne detection.

BACKGROUND

In any QKD procedure, a secret key is generated and exchanged between Alice (transmitting side) and Bob (receiving side). The security of the key exchange is guaranteed by quantum physics. One type of QKD is CV-QKD, in which the degree of freedom of the information-carrying quantum system is continuous. This is opposed to Discrete-Variable QKD (DV-QKD), in which the degree of freedom is discrete. In CV-QKD the continuous variables are typically the X and P quadratures of a quantized electromagnetic field. CV-QKD usually includes heterodyne detection carried out by a conventional heterodyne receiver. Heterodyne detection is typically preferred over homodyne detection, since it can avoid noises and interferences about the DC frequency and is thus more attractive.

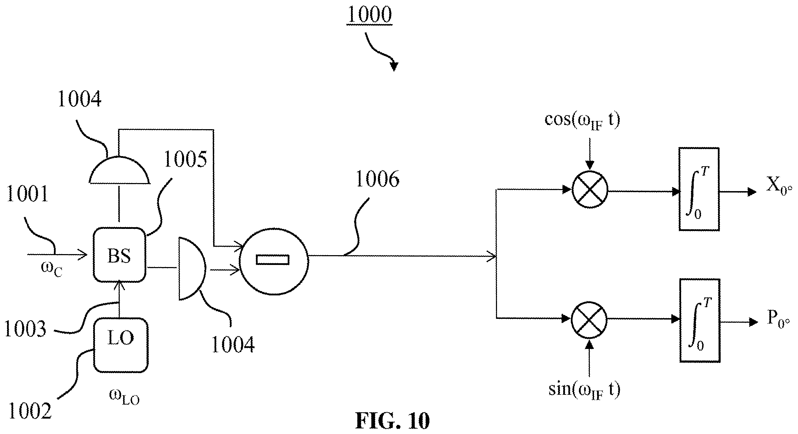

A conventional heterodyne receiver 1000 for CV-QKD is shown in FIG. 10 and employs heterodyne detection of an incoming optical signal (QKD signal 1001) having a frequency $\omega_C$. To this end, the conventional heterodyne receiver 1000 includes a local oscillator 1002, which provides an oscillating signal 1003 having a frequency $\omega_{LO}$ to a beam splitter 1005. The beam splitter 1005 splits both the received QKD signal 1001 and the received oscillating signal 1003 towards two photodetectors 1004 for heterodyne detection.

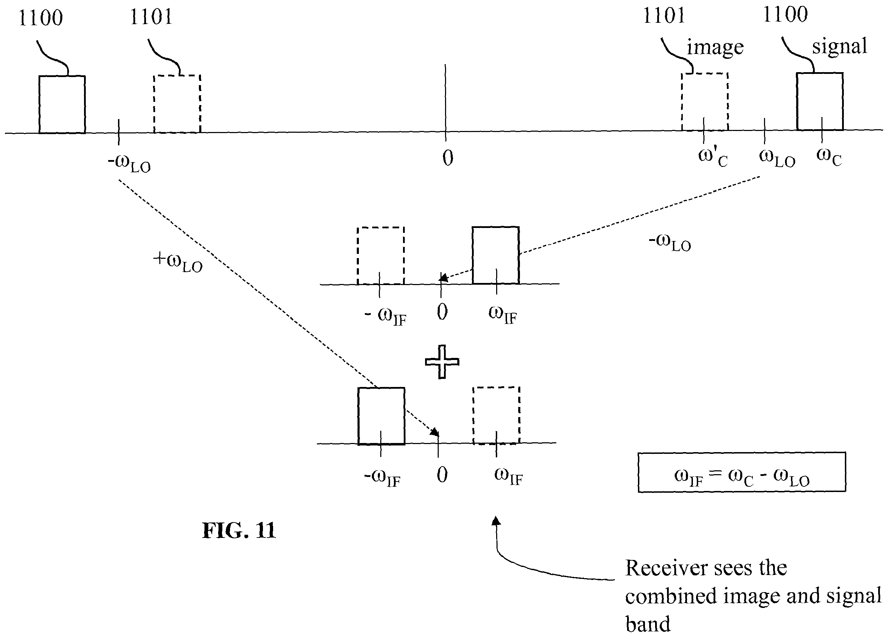

The heterodyne detection involves the mixing of the CV-QKD signal 1001. This is illustrated in FIG. 11, and leads to a merging of an image band 1101 and signal band 1100 at an intermediate frequency $\omega_{IF}$ of the CV-QKD signal 1001. The image band 1101 is particularly manifested on the opposite side of the signal band 1100 with respect to the frequency $\omega_{LO}$ of the oscillating signal 1003. In other words, the conventional heterodyne receiver 1000 sees only a merged optical signal, and thus converts this merged optical signal into an electrical signal 1006 for further processing. In particular, the two quadratures of the converted signal 1006 (i.e. the X and P quadratures) are extracted by electronic mixing of sine and cosine waveforms as indicated in FIG. 10. This may be done using analogue electronics or using a Digital Signal Processor (DSP) or a computer. In the standard CV-QKD procedure with heterodyne detection, the X and P values obtained with the conventional heterodyne receiver 1000 are then used to estimate noise variances.

Normal eavesdropping by Eve on the CV-QKD signal 1001 (such as trying to determine the quantum state that has been sent by Alice) adds noise to the signal. Thus, Bob (with the help of Alice) estimates the amount of excess noise in his received CV-QKD signal 1001. The excess noise is a signature of eavesdropping, and the more information is obtained by Eve, the more noise is introduced into the CV-QKD signal 1001. Thus, based on the amount of excess noise, Alice and Bob can estimate Eve's information on the raw key, and can subsequently remove this information by performing privacy amplification with a reduction ratio determined by the excess noise.

BING QI ET AL, "Generating the Local Oscillator 'Locally' in Continuous-Variable Quantum Key Distribution Based on Coherent Detection", PHYSICAL REVIEW X, (20151001), vol. 5, no. 4, proposes generating a local oscillator locally in CV-QKD based on coherent detection. ADRIEN MARIE ET AL, "Self-coherent phase reference sharing for continuous-variable quantum key distribution", CORNELL UNIVERSITY LIBRARY, 201 OLINE LIBRARY CORNELL UNIVERSITY ITHACA, NY 14853, 20160512, describes self-coherent phase reference sharing for CV-QKD. FABIAN LAUDENBACH ET AL, "Continuous-Variable Quantum Key Distribution with Gaussian Modulation-The Theory of Practical Implementations", CORNELL UNIVERSITY LIBRARY, 201 OLINE LIBRARY CORNELL UNIVERSITY ITHACA, NY 14853, (20170327), concerns CV-QKD with Gaussian modulation.

The challenge in CV-QKD is always to make the procedure as secure as possible against eavesdropping. To this end, a heterodyne receiver must be designed, which can reliably uncover all known eavesdropping attacks.

SUMMARY

In view of the above-mentioned challenges, the present invention aims to improve the security of the conventional heterodyne receiver and receiving method. The present invention accordingly has the object to provide a heterodyne receiver and corresponding receiving method that improve the security of CV-QKD.

In particular, it has been found out by the inventors that the conventional heterodyne receiver 1000 used in CV-QKD has a severe security loophole. This loophole has not been realized so far. In particular, it was discovered by the inventors that the loophole allows a so-called image-band attack, with which Eve is able to break the CV-QKD system.

The image-band attack evades the normal removal of Eve's information by tricking Bob into believing that a smaller amount of excess noise has been introduced into the CV-QKD signal 1001 than in reality.

The image-band attack particularly exploits the freedom of Eve to put any signal in the image band 1101. Due to the above-described merging of the image band 1101 and the signal band 1100 in the conventional heterodyne receiver 1000, the signature of eavesdropping in the signal band 1100 may be masked by the attack. In particular, Eve can add a noise component to the image band 1101, which is the reverse of the noise added to the signal band 1100 by her eavesdropping on the CV-QKD signal 1001. In this case, the merging of the image and signal bands 1101 and 1100 due to heterodyning in the conventional heterodyne receiver 1000 reduces the noise observed in the combined signal 1006. Thus, Bob will believe that only little or even no eavesdropping has occurred, and will not realize that in fact significant eavesdropping occurred. As a consequence of the reduced amount of excess noise in the combined signal 1006, Alice and Bob may perform a reduced amount of privacy amplification, which is insufficient to remove Eve's information on the secret key. Thus, the whole CV-QKD procedure is rendered insecure.

The object of the present invention in view of this newly found security loophole of the conventional heterodyne receiver is achieved by the solutions provided in the enclosed independent claims. Advantageous implementations of the present invention are further defined in the dependent claims.

A first aspect of the present invention provides a heterodyne receiver for receiving a CV-QKD signal, the receiver comprising a local oscillator unit configured to generate at least a first oscillating signal and a second oscillating signal, wherein the first oscillating signal has a different phase than the second oscillating signal, and both oscillating signals have a frequency outside of a frequency band of the received CV-QKD signal, and at least one detection unit configured to detect X and P quadrature values of a plurality of symbols of the CV-QKD signal using the first oscillating signal and the second oscillating signal.

A heterodyne receiver in this document is a coherent receiver structure, in which a local oscillating unit provides at least one oscillating signal that has a different frequency than the frequency of the modulated signal transmitted by the transmitter. Further, the heterodyne receiver converts the received signal to an intermediate frequency for further processing. This is notably the standard meaning in telecommunications technology.

The heterodyne receiver of the first aspect generates the at least two local oscillating signals with different phases (simultaneously or at different times), such that the X and P quadratures of the CV-QKD signal, which is in particular sufficiently far away in frequency from the respective frequencies of the two oscillating signals, can be detected. The use of two different phases for the two oscillating signals allows obtaining an upper bound on the excess noise for the signal band, and thus allows correctly bounding Eve's information. Detecting the X and P quadratures of the CV-QKD signal with only one phase value - as in the conventional heterodyne receiver - is not enough, when Eve launches the above-described image-band attack. Accordingly, the heterodyne receiver of the first aspect allows performing a more secure CV-QKD procedure than the conventional heterodyne receiver.

The heterodyne receiver comprises a detection unit configured to detect X and P quadrature values of a first set of the plurality of CV-QKD symbols using the first oscillating signal, and to detect X and P quadrature values of a second set of the plurality of CV-QKD symbols using the second oscillating signal.

Accordingly, different symbols of the CV-QKD signal may be detected with oscillating signals having different phase values. In this implementation case, an average of the different X and P quadrature values can be calculated, wherein the average describes an upper bound of the noise variance of the CV-QKD information in the CV-QKD signal. Since this bounds the information that Eve has, a sufficient amount of privacy amplification can be ensured.

The heterodyne receiver comprises a first detection unit configured to detect X and P quadrature values of each of the plurality of symbols using the first oscillating signal, and a second detection unit configured to detect X and P quadrature values of each of the plurality of CV-QKD symbols using the second oscillating signal.

Accordingly, each symbol of the plurality of symbols is detected with oscillating signals having different phase values. In this case, the detected X and P quadratures can be post-processed to obtain an upper bound on the information of Eve. Again, the plurality of symbols may include all symbols or a subset of all symbols of the CV-QKD signal.

The local oscillator unit comprises a local oscillator and a phase modulator arranged between the local oscillator and at least one detection unit, and the phase modulator is configured to modulate a phase of an output signal of the local oscillator.

One rather simple way to generate the first and second oscillating signals having different phase values is to selectively phase modulate the output signal of the local oscillator. This also allows a compact design of the receiver. However, since the phase modulator needs to switch often between different phase modulations, a faster phase modulator is required particularly if the plurality of symbols include many symbols.

The phase modulator is arranged between the local oscillator and the detection unit and is configured to modulate the phase of the output signal of the local oscillator to produce the first oscillating signal and the second oscillating signal.

Accordingly, one phase modulator is used to (preferably randomly) change the phase of the local oscillator output signal, in order to produce the two oscillating signals.

The local oscillator unit further comprises a beam splitter to divide the output signal of the local oscillator to the first detection unit as the first oscillating signal and the phase modulator, and the phase modulator is arranged between the beam splitter and the second detection unit and is configured to modulate the phase of the output signal of the local oscillator to produce the second oscillating signal.

The phase modulator may advantageously be set to a fixed phase modulation value, in order to produce only the second oscillating signal. The first oscillating signal is the local oscillator output signal. Therefore, the phase modulator does not have to switch its phase modulation for different symbols, and thus a larger amount of symbols can be managed by the phase modulator.

Each detection unit comprises two photodetectors, each configured to convert a received signal into a photocurrent, and a beam splitter configured to receive the CV-QKD signal and either the first or second oscillating signal, and to divide the received signals to the two photodetectors, such that one photodetector receives a sum of the CV-QKD signal and the first or second oscillating signal, and the other photodetector receives a difference between the CV-QKD signal and the first or second oscillating signal.

In an implementation form of the first aspect, the heterodyne receiver is configured to randomly select the first set of symbols and/or the second set of symbols from the plurality of symbols.

This introduced randomness is provided to make the CV-QKD procedure more secure, since Eve cannot predict how the detection is performed.

In a further implementation form of the first aspect, the plurality of symbols includes all symbols or a subset of all symbols of the CV-QKD signal.

Selecting oscillating signals of different phase values for each symbol of the CV-QKD signal achieves the best security. However, already applying the procedure to a subset of the symbols, preferably a subset of contiguous symbols, of the CV-QKD signal provides very high accuracy, while somewhat relaxing the demands on the local oscillating unit to output different oscillating signals at a high frequency.

In a further implementation form of the first aspect, the heterodyne receiver is configured to randomly select the phase value of the first oscillating signal and/or the phase value of the second oscillating signal, preferably from a subset of predetermined phase values.

This introduces another randomness into the system, thus improving the security of the CV-QKD procedure.

In an implementation form of the first aspect, the heterodyne receiver further comprises a signal combining unit configured to generate, for each of the plurality of symbols, a processed X quadrature value by subtracting the P quadrature value of the symbol detected by the second detection unit from the X quadrature value of the symbol detected by the first detecting unit, and a processed P quadrature value by adding the P quadrature value of the symbol detected by the first detection unit to the X quadrature value of the symbol detected by the second detection unit.

The processed X and P quadrature values can be used to compute variances, which correctly reflect the variances of the CV-QKD information in the signal band. Therefore, they can be used to bound the information of Eve, and determine the amount of privacy amplification needed.

In an implementation form of the first aspect, the phase modulator is arranged between the local oscillator and the detection unit and is configured to modulate the phase of the output signal of the local oscillator to produce the first oscillating signal and the second oscillating signal.

Accordingly, one phase modulator is used to (preferably randomly) change the phase of the local oscillator output signal, in order to produce the two oscillating signals.

In an implementation form of the first aspect, the local oscillator unit comprises a local oscillator and is configured to vary a frequency of the output signal of the local oscillator, in order to produce the first oscillating signal and the second oscillating signal.

This provides another way to modulate the phase value of the local oscillator output signal. Since there is a frequency difference between the local oscillator output signal and the QKD signal, the frequency difference translates to a phase change over time. By shifting the frequency of the local oscillator output signal, phase changes can be induced to produce the first and second oscillating signals.

In an implementation form of the first aspect, a phase difference between the first oscillating signal and the second oscillating signal is between 30-150° or 210°-330°, is preferably between 80-100° or 250-290°, and is more preferably 90° or 270°.

In principle, any phase difference between the at least two oscillating signals can be used to implement the first aspect receiver. However, with the phase difference values of the above implementation form, very good security and high reliability of the CV-QKD are achieved.

A second aspect of the present invention provides a method of receiving a CV-QKD signal, the method comprising generating at least a first oscillating signal and a second oscillating signal, wherein the first oscillating signal has a different phase than the second oscillating signal, and both oscillating signals have a frequency outside of a frequency band of the received CV-QKD signal, and detecting X and P quadrature values of a plurality of symbols of the CV-QKD signal using the first oscillating signal and the second oscillating signal.

The method comprises detecting X and P quadrature values of a first set of the plurality of symbols using the first oscillating signal, and detecting X and P quadrature values of a second set of the plurality of symbols using the second oscillating signal.

The method further comprises detecting X and P quadrature values of each of the plurality of CV-QKD symbols using the first oscillating signal, and detecting X and P quadrature values of each of the plurality of symbols using the second oscillating signal.

The method further comprises generating, for each of the plurality of symbols, a processed X quadrature value by subtracting the P quadrature value of the symbol detected using the second oscillating signal from the X quadrature value of the symbol detected using the first oscillating signal, and a processed P quadrature value by adding the P quadrature value of the symbol detected using the first oscillating signal to the X quadrature value of the symbol detected using the second oscillating signal.

The method comprises modulating a phase of an output signal of a local oscillator.

The method further comprises modulating the phase of the output signal of the local oscillator to produce the first oscillating signal and the second oscillating signal.

The method further comprises dividing the output signal of the local oscillator, providing one part of the divided output signal of the local oscillator as the first oscillating signal, and modulating the phase of the other part of the output signal of the local oscillator to produce the second oscillating signal.

The method further comprises, receiving the CV-QKD signal and either the first or second oscillating signal, dividing the received signals to two photodetectors, such that one photodetector receives a sum of the CV-QKD signal and the first or second oscillating signal, and the other photodetector receives a difference between the CV-QKD signal and the first or second oscillating signal, and converting by each photodetector a received signal into a photocurrent.

In a further implementation form of the second aspect, the method comprises randomly selecting the first set of symbols and/or the second set of symbols from the plurality of symbols.

In a further implementation form of the second aspect, the plurality of symbols includes all symbols or a subset of all symbols of the CV-QKD signal.

In a further implementation form of the second aspect, the method comprises randomly selecting the phase value of the first oscillating signal and/or the phase value of the second oscillating signal, preferably from a subset of predetermined phase values.

In an implementation form of the second aspect, the method comprises varying a frequency of the output signal of the local oscillator, in order to produce the first oscillating signal and the second oscillating signal.

In an implementation form of the second aspect, a phase difference between the first oscillating signal and the second oscillating signal is between 30-150° or 210°-330°, is preferably between 80-100° or 250-290°, and is more preferably 90° or 270°.

The method of the second aspect and its implementation forms achieve the same technical effects and advantages as the heterodyne receiver of the first aspect and its respective implementation forms.

A third aspect concerns a combination of the concept of the heterodyne receiver of the first aspect of the present invention with a heterodyne receiver of a third aspect for improved security. The heterodyne receiver of the third aspect is configured to receive a CV-QKD signal, the receiver comprising a local oscillator unit configured to generate an oscillating signal, an optical filter unit configured to produce a filtered CV-QKD signal by filtering out an image band of the CV-QKD signal, and a detection unit configured to detect X and P quadrature values of a plurality of symbols of the filtered CV-QKD signal using the oscillating signal.

This solution provided by combining the heterodyne receiver of the first aspect with the heterodyne receiver of the third aspect to the above-mentioned object is particularly simple. The heterodyne receiver of the third aspect is configured to block the image-band attack by using the optical filter unit, in order to filter out the image band before performing the heterodyning. The optical filter unit may essentially remove any non-vacuum states in the image band. Thus, any noise added by Eve to the image band will not appear to compensate the noise she generates in the signal band through eavesdropping. Accordingly, Bob can correctly determine the amount of eavesdropping, and can thus provide the correct privacy amplification. Accordingly, the heterodyne receiver of the third aspect allows a more secure CV-QKD procedure than the conventional heterodyne receiver.

In an implementation form of the third aspect, the detection unit comprises two photodetectors, each configured to convert a received signal into a photocurrent, and a beam splitter configured to receive the filtered CV-QKD signal and the oscillating signal, and to divide the received signals to the two photodetectors, such that one photodetector receives a sum of the filtered CV-QKD signal and the oscillating signal, and the other photodetector receives a difference between the filtered CV-QKD signal and the oscillating signal.

In a further implementation form of the third aspect, the optical filter is configured to produce the filtered CV-QKD signal by allowing a signal band of the CV-QKD signal to pass through completely.

Thus, the reliability of the CV-QKD procedure is high, while still having a significantly improved security by eliminating the possibility of the image-band attack.

In a further implementation form of the third aspect, the optical filter has a sharp edge in its frequency response.

Since in practice the signal band and the image band are usually near together in the frequency domain, the optical filter unit with its sharp edge in the frequency response can more effectively filter out one band from the other. Thus, the security of the CV-QKD procedure is improved.

In a further implementation form of the third aspect, the sharp edge in the frequency response of the filter is at a frequency that is between a center frequency of the image band and a center frequency of the signal band.

In other words, the edge of the passband of the optical filter unit is purposefully selected and configured in view of the above-described image-band attack, and in order to filter out the image band.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities.

Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

FIG. 1      shows a heterodyne receiver according to an embodiment of the present invention.

FIG. 2      shows a heterodyne receiver according to an embodiment of the present invention.

FIG. 3      shows a heterodyne receiver according to an embodiment of the present invention.

FIG. 4      shows a combining unit of a heterodyne receiver according to an embodiment of the present invention.

FIG. 5      shows a heterodyne receiver according to an embodiment of the present invention.

FIG. 6      shows a heterodyne receiver according to an embodiment of the present invention.

FIG. 7      shows a heterodyne receiver according to an embodiment of the present invention.

FIG. 8      shows schematically a filtering of the image band by a heterodyne receiver according to an embodiment of the present invention.

FIG. 9      shows a method according to an embodiment of the present invention, which may be carried out by a heterodyne receiver according to an embodiment of the present invention.

FIG. 10      shows a conventional heterodyne receiver.

FIG. 11      shows schematically a merging of image band and signal band in a conventional heterodyne receiver.

DETAILED DESCRIPTION OF EMBODIMENTS

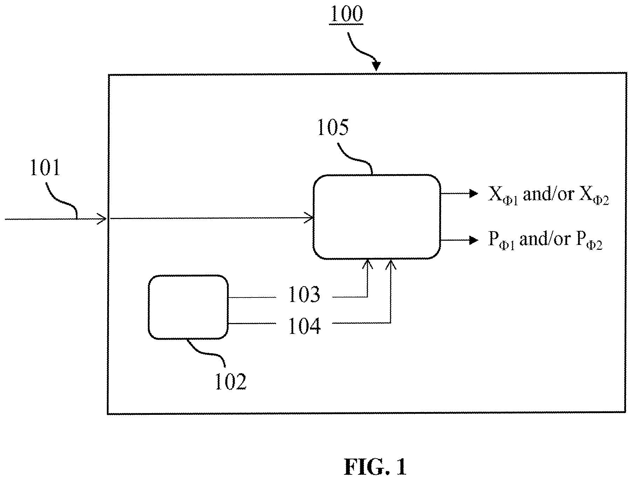

FIG. 1 shows a heterodyne receiver 100 according to an embodiment of the present invention. In particular, FIG. 1 shows a heterodyne receiver 100 configured to receive a CV-QKD signal 101 from a transmitter side, i.e. the heterodyne receiver 100 is configured to perform CV-QKD in a CV-QKD system consisting of a transmitter and the receiver 100.

The CV-QKD signal 101 is particularly an optical signal of a predetermined frequency band. The heterodyne receiver 100 comprises a local oscillator unit 102 and at least one detection unit 105.

The local oscillator unit 102 is configured to generate at least a first oscillating signal 103 and a second oscillating signal 104. Also a larger plurality of oscillating signals may be generated. The at least two oscillating signals 103 and 104 are optical signals. Thereby, the first oscillating signal 103 has a different phase than the second oscillating signal 104. Further, the at least two oscillating signals 103 and 104 have a frequency, which is outside of the frequency band of the received CV-QKD signal 101. In other words, the at least two oscillating signals 103 and 104 have a different frequency than the received CV-QKD signal 101.

The detection unit 105 is an optical detection unit, and thus preferably includes at least one photodetector or light sensor, and is specifically configured to detect X and P quadrature values of a plurality of symbols of the CV-QKD signal 101 using the first oscillating signal 103 and the second oscillating signal 104. In particular, for each symbol of the plurality of symbols of the CV-QKD signal 101, the detection unit 105 may detect $X_{\Phi 1}$ and/or $X_{\Phi 2}$ quadrature values and $P_{\Phi 1}$ and/or $P_{\Phi 2}$ quadrature values, wherein $X_{\Phi 1}$ and $P_{\Phi 1}$ relate to the first oscillating signal 103 with a first phase value of $\Phi 1$, and $X_{\Phi 2}$ and $P_{\Phi 2}$ relate to the second oscillating signal 104 with a second phase value of $\Phi 2$. The X and P quadratures correspond to the cosine and sine components of an oscillating signal (whether it is optical or electronic). Further, the X and P quadratures of a quantized electromagnetic mode of the CV-QKD signal 101 are the real and imaginary parts of the annihilation operator of the mode, which together with the corresponding creation operator satisfy the bosonic commutation relation. Using an annihilation operator to represent a quantum signal is a standard approach in quantum optics. The bosonic commutation relation is consistent with the standard commutation relation for position and momentum and thus X is sometimes referred to as a 'position' quadrature and P as a 'momentum' quadrature. The plurality of symbols may notably include all symbols or only a subset of all symbols of the CV-QKD signal 101.

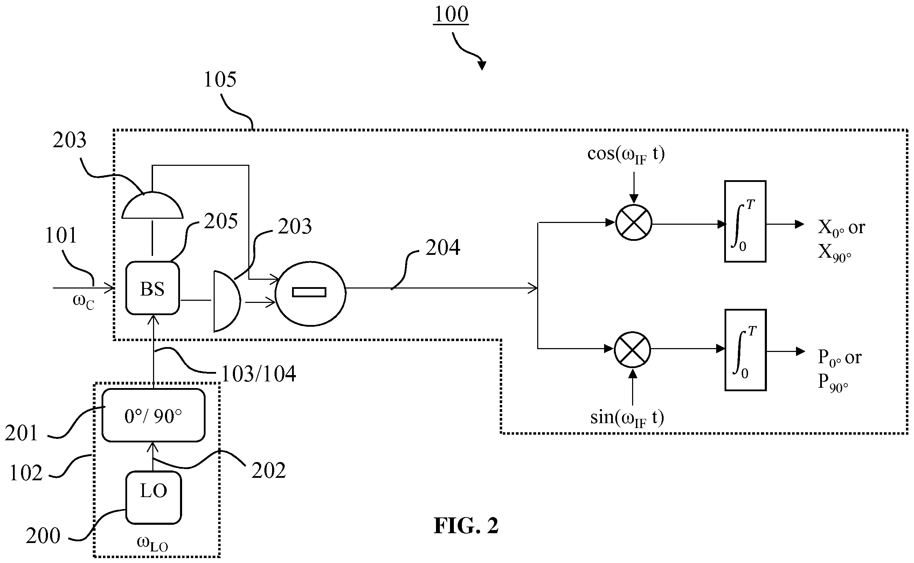

FIG. 2 shows a heterodyne receiver 100 according to an embodiment of the present invention, which builds on the embodiment of the heterodyne receiver 100 shown in FIG. 1. Identical elements of the heterodyne receivers 100 in FIG. 1 and FIG. 2 are indicated with the same reference signs, and have the same functions. In particular, FIG. 2 shows a heterodyne receiver 100, which has one local oscillating unit 102 and one detection unit 105.

The local oscillating unit 102 comprises a local oscillator 200 and a phase modulator 201, which is arranged between the local oscillator 200 and the detection unit 105. The phase modulator 201 is configured to modulate a phase of an output signal 202 of the local oscillator 200, in order to produce selectively the first oscillating signal 103 and the second oscillating signal 104. As indicated in FIG. 2, the first oscillating signal 103 may have a first phase value of $\Phi 1$ = 0°, while the second oscillating signal 104 may have a second phase value of $\Phi 2$ = 90°.

The detection unit 105 is configured to detect X and P quadrature values of a first set of the plurality of symbols using the first oscillating signal 103, and to detect X and P quadrature values of a second set of the plurality of symbols using the second oscillating signal 104. That means, the detection unit 105 is configured to detect the quadrature values of these symbols by using both the first and second oscillating signals 103 and 104, but not by using both oscillating signals 103 and 104 for detecting one and the same symbol. For the illustrated example, the detection unit 105 particularly detects $X_{0°}$ and $P_{0°}$, if a symbol is detected using the first oscillating signal 103, and detects $X_{90°}$ and $P_{90}$, if a symbol is detected using the second oscillating signal 104. Preferably, the detection unit 105 selects randomly the first set of symbols and/or the second set of symbols from the plurality of symbols. This means that the detection unit 105 detects preferably randomly, which of the symbols to detect using the first oscillating signal 103, and which of the symbols to detect using the second oscillating signal 104.

FIG. 2 shows a preferred implementation form of the detection unit 105 with two photodetectors 203 and one beam splitter 205. The beam splitter 205 is arranged to receive the CV-QKD signal 101 and - from the local oscillating unit 102 - either the first oscillating signal 103 or second oscillating signal 104, depending on the setting of the phase modulator 201. The beam splitter 205 divides both received signals to the two photodetectors 203. In particular, the beam splitter 205 divides the CV-QKD signal 101 and the local oscillating signal 103 or 104 such that one of the photodetectors 203 receives a sum of the CV-QKD signal 101 and the first or second oscillating signal 103 or 104, and the other one of the photodetectors 203 receives a difference between the CV-QKD signal 101 and the first or second oscillating signal 103 or 104.

Each of the photodetectors 203 is in principle configured to convert a received optical signal into a photocurrent. Here the photodetectors 203 convert the optical signals resulting from the CV-QKD signal 101 and either the first or second oscillating signal 103 or 104. The optical signals are merged to the signal 204, which is further used to calculate the X and P values. The optical signals may be, for instance, subtracted from each other to obtain the signal 204. The obtained signal 204 is then used to calculate the X and P values.

As an example, given one block of key data, some of the symbols are randomly selected by the detection unit 105 to be detected with the first oscillating signal 103, and some other ones of the symbols are detected with the second oscillating signal 104. In the exemplary embodiment of FIG. 2, the phase of the local oscillating unit 102 is randomly changed by 90°, in order to produce the first oscillating signal 103 with the first phase value of 0° and the second oscillating signal 104 with the phase value of 90°. Notably, these first and second phase values could also take different values. For example, the first phase value $\Phi 1$ of the first oscillating signal 103 may be set between 270°-30° or 150°-210°, and preferably is 0° or 180°. The second phase value $\Phi 2$ of the second oscillating signal 104 may be set between 60°-120° or 240°-300°, and preferably is 90° or 270°. The phase values of the first oscillating signal 103 and/or the second oscillating signal 104 may also be selected randomly, in this case preferably from a subset of predetermined phase values.

After the first detecting unit 105 in FIG. 2 has detected $X_{0°}$ and $P_{0°}$ for the first set of symbols and has detected $X_{90°}$ and $P_{90°}$ for the second set of symbols, and average of these results may be obtained. The obtained average describes an upper bound of the noise variance of the QKD signal 101 in the block of key data. This can advantageously be used to bound Eve's information and consequently determine the amount of privacy amplification that is needed for Alice and Bob to nevertheless perform a secure CV-QKD procedure.

For illustrative purpose, the mathematical descriptions below are simplified and written in the classical (non-quantum) language whenever a quantum description is not needed to explain the effect of the image-band attack and the counter-measures.

For an exemplary CV-QKD signal 101 with a signal band and an image band defined having an analogous classical description

$$y_1(t) = \underbrace{A_c \cos(\omega_c t) + A_s \sin(\omega_c t)}_{\text{signal band}} + \underbrace{B_c \cos(\omega_c' t) + B_s \sin(\omega_c' t)}_{\text{image band}}$$

wherein $A_c$ and $A_s$ represent the CV-QKD information encoded in the cosine and sine components of the signal band (potentially with noises) and correspond to the X and P quadratures of the CV-QKD information, and $B_c$ and $B_s$ represents the cosine and sine components of whatever signals are present in the image band (which normally are just shot noises), the output signal 204 in the heterodyne receiver 100 for the first oscillating signal 103 with a first phase value of 0° is:

$$y_2(t) = y_1(t)\cos(\omega_{\text{LO}} t)$$
$$\simeq \frac{1}{2}(A_c + B_c)\cos(\omega_{\text{IF}} t) + \frac{1}{2}(A_s - B_s)\sin(\omega_{\text{IF}} t)$$

The output signal 204 in the heterodyne receiver 100 for the first oscillating signal 104 with a first phase value of 90° is:

$$y_3(t) = y_1(t)\sin(\omega_{\text{LO}} t)$$
$$\simeq \frac{1}{2}(-A_c + B_c)\sin(\omega_{\text{IF}} t) + \frac{1}{2}(A_s + B_s)\cos(\omega_{\text{IF}} t)$$

Focusing on the sine component of the latter output of the heterodyne receiver 100 at the phase value of 90°, a corresponding quantum operator is:

$$\hat{P}_{90°} := -\hat{A}_c + \hat{B}_c$$

The corresponding quantum operator for the cosine component of the output of the heterodyne receiver at a phase value of 0° is:

$$\hat{X}_{0°} = \hat{A}_c + \hat{B}_c$$

Taken together, an average of the variances of these two operators can be calculated as:

$$V_{\text{avg}} = \frac{1}{2}\left[\text{var}(\hat{P}_{90°}) + \text{var}(\hat{X}_{0°})\right]$$
$$= \text{var}(\hat{A}_c) + \text{var}(\hat{B}_c)$$

where $var(\hat{Z}) = \langle\hat{Z}^2\rangle - \langle\hat{Z}\rangle^2$, $\langle\hat{Z}\rangle$ indicating the expectation of the operator $\hat{Z}$. This average gives an upper bound for $\text{var}(\hat{A}_c)$,

which contains the excess noise for the signal band. A similar analysis with the cosine component of the output of the heterodyne receiver at a phase value of 90° and the sine component of the output of the heterodyne receiver at a phase value of 0° gives an upper bound for $\text{var}(\hat{A}_S)$. Thus, Eve's information on the CV-QKD information can be bounded correctly.

As mentioned above, the phase values of 0° and 90° are only exemplary and preferred phase values. However, also the general case of a relative phase difference between the two oscillating signals 103 and 104 works to improve the security of the CV-QKD procedure.

The case where there is a phase difference 0 between the CV-QKD signal 101 and an output signal 202 of the local oscillator 200 also works to improve the security of the CV-QKD procedure. The average of the four quadratures can in this case still be found and is:

$$V'_{\text{avg}} = \frac{1}{4}\left[\text{var}(\hat{P}'_{90^\circ}) + \text{var}(\hat{X}'_{0^\circ}) + \text{var}(\hat{X}'_{90^\circ}) + \text{var}(\hat{P}'_{0^\circ})\right]$$
$$= \frac{1}{2}\left[\text{var}(\hat{A}_c) + \text{var}(\hat{A}_s) + \text{var}(\hat{B}_c) + \text{var}(\hat{B}_s)\right]$$

where

$$\hat{X}'_{0^\circ} = \hat{A}'_c + \hat{B}'_c,$$

$$\hat{P}'_{0^\circ} = \hat{A}'_s - \hat{B}'_s,$$

$$\hat{X}'_{90^\circ} = \hat{A}'_s + \hat{B}'_s,$$

$$\hat{P}'_{90^\circ} = -\hat{A}'_c + \hat{B}'_c$$

are variables similarly defined as X and P above with $\hat{A}_C'$ and $\hat{A}_S'$ being the rotated version of $\hat{A}_C$ and $\hat{A}_S$ encoding the CV-QKD information:

$$A'_c = A_c\cos(\theta) + A_s\sin(\theta)$$

$$A'_s = -A_c\sin(\theta) + A_s\cos(\theta).$$

The quantity $V_{avg}'$ upper bounds the average noise of the signal $[\text{var}(\hat{A}_C) + \text{var}(\hat{A}_S)]/2$ and can in this case be used to obtain an upper bound on Eve's information on the CV-QKD information.

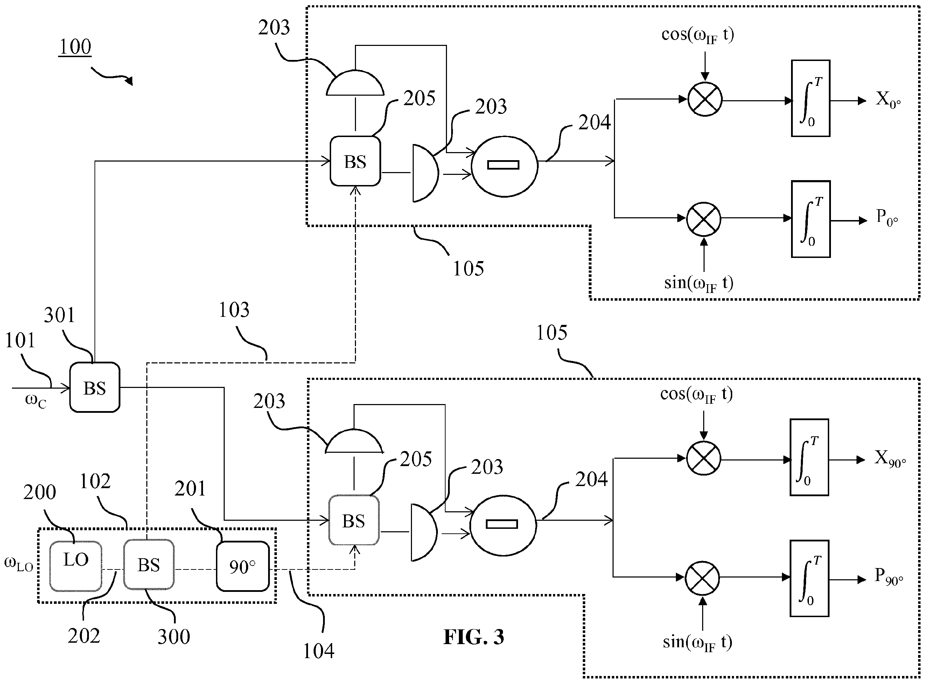

FIG. 3 shows a heterodyne receiver 100 according to an embodiment of the present invention, which builds on the embodiment of the heterodyne receiver 100 shown in FIG. 1. Identical elements of the heterodyne receivers 100 in FIG. 1 and FIG. 3 are indicated with the same reference signs, and have the same functions. In particular, the heterodyne receiver 100 of FIG. 3 has two detection units 105. A first detection unit 105 configured to detect X and P quadrature values of each of the plurality of symbols using the first oscillating signal 103, and a second detection unit 105 configured to detect X and P quadrature values of each of the plurality of symbols using the second oscillating signal 104. Further, the heterodyne receiver 100 has one local oscillating unit 102.

Both detection units 105 are as described above for the heterodyne receiver 100 of FIG. 2, namely including one beam splitter 205 and two photodetectors 203. The local oscillating unit 102 includes again a local oscillator 200 and a phase modulator 201. However, the local oscillating unit 102 also includes a beam splitter 300. The beam splitter 300 is configured to divide the output signal 202 of the local oscillator 200 to the first detection unit 105 - preferably directly without any phase modulation as the first oscillating signal 103 - and the phase modulator 201. The phase modulator 201 is arranged between the beam splitter 300 and the second detection unit 105, and is configured to modulate the phase of the output signal 202 of the local oscillator 200 to produce the second oscillating signal 104, and provide it to the second detection unit 105.

Further, the heterodyne receiver 100 comprises a beam splitter 301, which is arranged and configured to divide the CV-QKD signal 101 to the first detection unit 105 and the second detection unit 105, respectively. Accordingly, the first detection unit 105 can detect X and P values of a plurality of symbols of the CV-QKD signal 101 using the first oscillating signal 103, and the second detection unit 105 can detect X and P values of a plurality of symbols of the CV-QKD signal 101 using the second oscillating signal 104.

Similar to the example described above with respect to FIG. 2, given again one block of key data, all of the plurality of symbols may be detected with the first oscillating signal 103 having a first phase value of $\Phi 1 = 0°$, and all of the plurality of symbols may also be detected using the second oscillating signal 104 having a second phase value of $\Phi 2 = 90°$.

After the double heterodyne detection performed by means of the two detection units 105, four outputs are produced for each symbol of the plurality of symbols, namely $X_{0°}$, $P_{0°}$, $X_{90°}$, and $P_{90°}$. Thereby, the first detecting unit 105 detects $X_{0°}$ and $P_{0°}$ for each of the symbols, while the second detecting unit 105 detects $X_{90°}$ and $P_{90°}$ for each of the symbols.

For the exemplary CV-QKD signal 101 having an analogous classical description

$$y_1(t) = \underbrace{A_c \cos(\omega_c t) + A_s \sin(\omega_c t)}_{\text{signal band}} + \underbrace{B_c \cos(\omega_c' t) + B_s \sin(\omega_c' t)}_{\text{image band}}$$

wherein again $A_c$ and $A_s$ represent the CV-QKD information encoded in the cosine and sine components of the signal band (potentially with noises) and correspond to the X and P quadratures of the CV-QKD information, and $B_c$ and $B_s$ represents the cosine and sine components of whatever signals are present in the image band (which normally are just shot noises), the two signals 204 of the two sets of heterodyne detection are again of the form:

$$y_2(t) = y_1(t) \cos(\omega_{LO} t)$$
$$\simeq \frac{1}{2}(A_c + B_c) \cos(\omega_{IF} t) + \frac{1}{2}(A_s - B_s) \sin(\omega_{IF} t)$$

$$y_3(t) = y_1(t) \sin(\omega_{LO} t)$$
$$\simeq \frac{1}{2}(-A_c + B_c) \sin(\omega_{IF} t) + \frac{1}{2}(A_s + B_s) \cos(\omega_{IF} t)$$

Consequently, without considering the noise, the quadrature values $X_{0°}$ and $P_{0°}$ correspond to the coefficients of the cosine and sine terms of $y_2(t)$, respectively. Further, the quadrature values $X_{90°}$ and $P_{90°}$ correspond to the coefficients of the cosine and sine terms of $y_3(t)$, respectively. That is:

$$X_{0°} \propto A_c + B_c,$$

$$P_{0°} \propto A_s - B_s,$$

$$X_{90°} \propto A_s + B_s,$$

$$P_{90°} \propto -A_c + B_c.$$

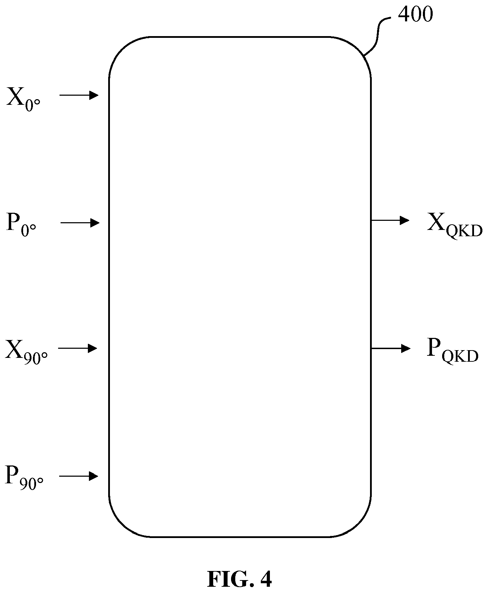

Using preferably further a signal combiner 400 as shown in FIG. 4, these four results $X_{0°}$, $P_{0°}$, $X_{90°}$, and $P_{90°}$ may be combined in a way that the image band components (represented by $B_c$ and $B_s$) are canceled out, namely a combination such that:

$$X_{QKD} \equiv X_{0°} - P_{90°}$$

$$P_{QKD} \equiv P_{0°} + X_{90°}$$

These two new processed quadrature values $X_{QKD}$ and $P_{QKD}$ can be used for further post-processing. In particular, the variances of these processed quadrature values can be computed in a manner as described above for the heterodyne receiver 100 shown in FIG. 2. These variances correctly reflect the variances of the quadratures of the CV-QKD information in the signal band. This fact can again be used to bound Eve's information on the CV-QKD information, and to determine the amount of privacy amplification needed for Alice and Bob. Since no image band components appear in the processed quadrature values $X_{QKD}$ and $P_{QKD}$, Eve's manipulation in the image band is no longer effective.

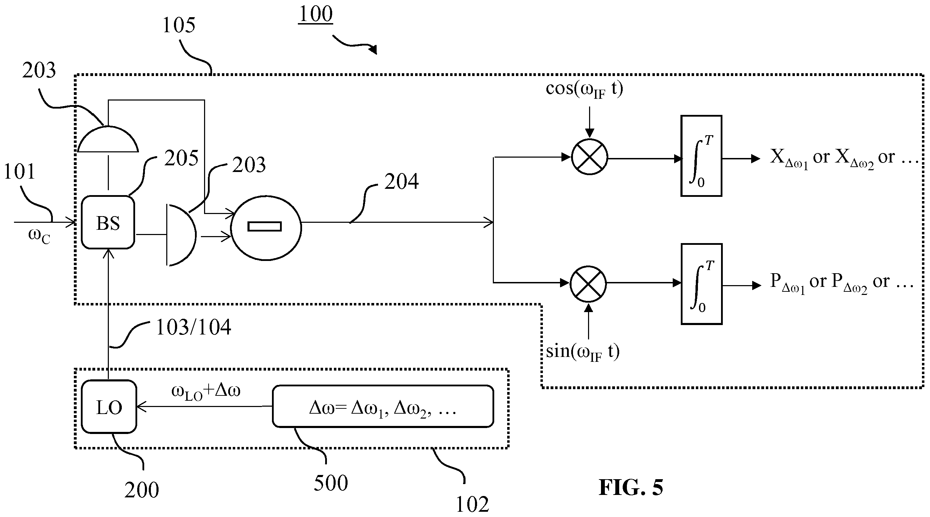

FIG. 5 shows a heterodyne receiver 100 according to an embodiment of the present invention, which builds on the heterodyne receiver 100 shown in FIG. 1. Identical elements of the heterodyne receivers 100 in FIG. 1 and FIG. 5 are indicated with the same reference signs, and have the same functions. In particular, FIG. 5 shows a heterodyne receiver 100 with one detection unit 105 and one local oscillator unit 102. The detection unit 105 is as described above for the heterodyne receivers 100 of FIG. 2 and FIG. 3, namely with a beam splitter 205 and two photodetectors 203.

The local oscillator unit 102 in this case comprises a local oscillator 200 and is configured to vary a frequency of the output signal 202 of the local oscillator 200, for instance, by means of a frequency control unit 500 of the local oscillator unit 102. By varying the frequency of the local oscillator output signal, the at least first oscillating signal 103 and second oscillating signal 104 can be produced.

The concept is similar to the heterodyne receiver 100 shown in FIG. 2, in the sense that randomly changing the frequency of the local oscillator 200 will induce random phases at different times. Since there is a significant frequency difference between the local oscillator 200 and the QKD signal 101, the frequency difference translates to a phase change over time. Although the resulting phases may not be 0° or 90° as in the previous exemplary cases, the image-band attack can be revealed by using the local oscillating signals 103 and 104 with a general phase difference. An analogous post-analysis of the resulting detected values gives bounds on Eve's information, so that the CV-QKD procedure becomes secure against the image-band attack.

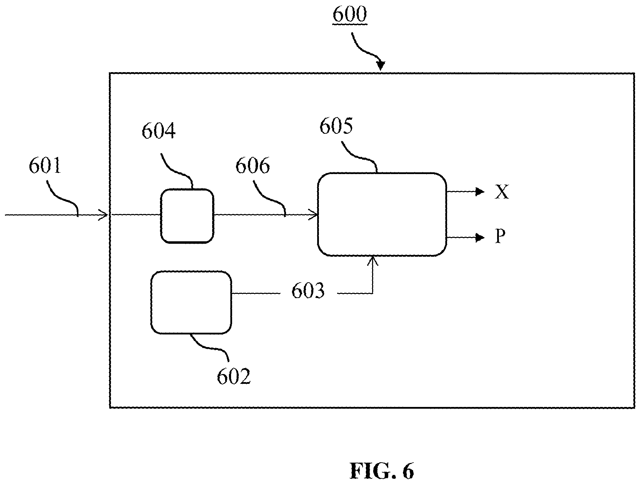

FIG. 6 shows a heterodyne receiver 600 according to an embodiment of the present invention. In particular, it shows a heterodyne receiver 600 for receiving a CV-QKD signal 601, i.e. for performing a CV-QKD procedure in a system together with a transmitter. The heterodyne receiver 600 is an alternative solution to the heterodyne receivers 100 presented above with respect to FIG. 1, FIG. 2, FIG. 3 and FIG. 5, and comprises a local oscillator unit 602, and optical filter unit 604, and a detection unit 605.

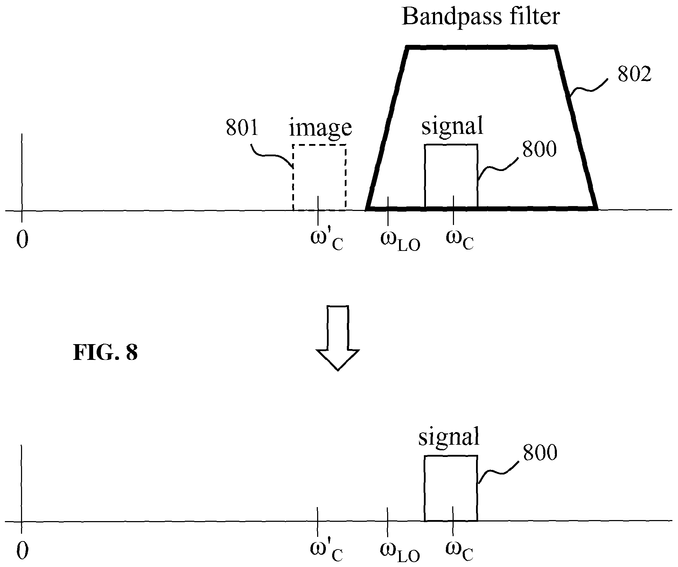

The local oscillator unit 602 is configured to generate an oscillating signal 603. In this case, the local oscillator unit 602 may be a local oscillator. The optical filter unit 604 is configured to receive the local oscillating signal 603 from the local oscillator unit 602, to filter the signal 603 according to its characteristics, and to thus produce a filtered CV-QKD signal 606. In particular, with reference to FIG. 8, the optical filter unit 604 is configured to filter out an image band 801 of the CV-QKD signal 601. The detection unit 605 is then configured to detect X and P quadrature values of a plurality of symbols of the filtered CV-QKD signal 606 using the oscillating signal 603.

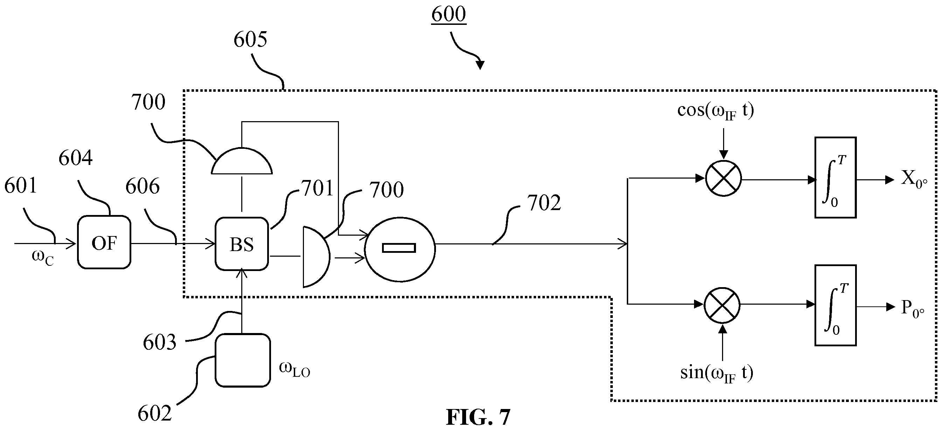

FIG. 7 shows a heterodyne receiver 600 according to an embodiment of the present invention. The detection unit 605 shows an implementation form with two photodetectors 700 and one beam splitter 701.

The beam splitter 701 is arranged to receive the filtered CV-QKD signal 606 and the oscillating signal 603 from the local oscillating unit 602. The beam splitter 701 divides both received signals to the two photodetectors 700. In particular, the beam splitter 701 divides the filtered CV-QKD signal 606 and the local oscillating signal 603 such that one of the photodetectors 700 receives a sum of the filtered CV-QKD signal 606 and the oscillating signal 603, and the other one of the photodetectors 700 receives a difference between the filtered CV-QKD signal 606 and the oscillating signal 603.

Each of the photodetectors 700 is in principle configured to convert a received optical signal into a photocurrent. Here the photodetectors 700 convert the optical signals resulting from the filtered CV-QKD signal 606 and the oscillating signal 603. The optical signals are merged to the signal 702, which is further used to calculate the X and P values. The optical signals may be, for instance, subtracted from each other to obtain the signal 702. The obtained signal 702 is then used to calculate the X and P values. The output signal 702 is then further processed as described above with reference to the signal 204.

Fig. 8 schematically shows a filtering of the image band by a heterodyne receiver according to an embodiment of the present invention. In particular, figure 8 shows a configuration and arrangement of the optical filter unit 104 according to an embodiment of the present invention.

The location of the image band 801 in the CV-QKD signal 101 is determined by the frequency $\omega_{LO}$ of the local oscillating unit 602 of the heterodyne receiver 100. Thus the optical filter unit 604 and the heterodyne receiver 100 should match in their characteristics. That is, the optical filter unit 604 is not any arbitrary filter unit, but is purposefully selected for the heterodyne receiver 100 to accomplish the task of filtering the image band 801. Furthermore, the extinction ratio of the optical filter unit 604 should be high enough, so that any possible power in the image band 801 is reduced significantly. Preferably, the extinction ratio of the optical filter unit 604 is such that the power in the image band 801 is reduced to at least below 10%, more preferably below 1%, most preferably to 0%. The transmission of the optical filter unit 604 across the signal band 800 should in contrast be high and uniform, in order to introduce the least disturbance to the QKD signal 101. Preferably, the transmission of the optical filter unit 604 to the signal band 800 is at least 90%, more preferably 99%, most preferably 100%.

One or more bandpass filters and at least one notch (also called a bandstop) filters may be used in the optical filter unit 604 for this task. Preferably, a pass bandwidth 802 of the optical filter unit 604 is much wider than the signal band 800, as indicated schematically in FIG. 8. For instance, it may be at least twice as wide, more preferably even 5-10 times as wide. Thereby, preferably, the pass bandwidth 802 of the optical filter unit 604 is arranged such that the signal band 800 is located asymmetrically within the pass bandwidth 802. In FIG. 8 it is schematically indicated that the pass bandwidth 802 is closer to the signal band 800 on the lower frequency side. At least one this lower frequency side of the signal band 800, the optical filter unit 604 has preferably a sharp edge in its frequency response, in order to effectively filter the image band 801, preferably completely, while not affecting the signal band 800.

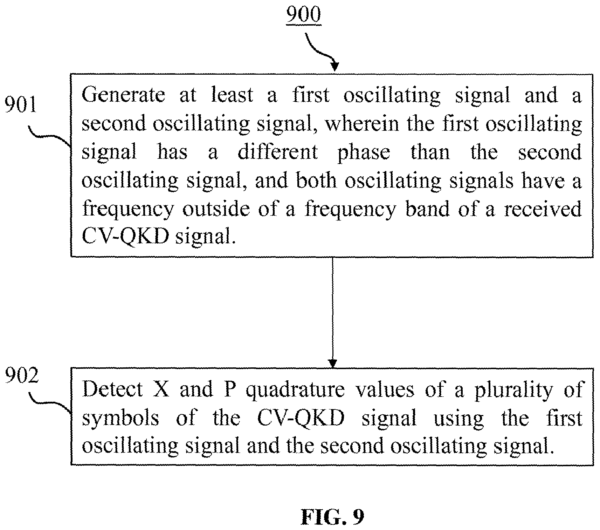

FIG. 9 shows a method 900 according to an embodiment of the present invention. The method 900 is particularly a method of receiving a CV-QKD signal 101. The method 900 comprises a step of receiving CV-QKD signal 101. Further the method comprises a step of generating 901 at least a first oscillating signal 103 and a second oscillating signal 104, wherein the first oscillating signal 103 has a different phase than the second oscillating signal 104, and both oscillating signals 103 and 104 have a different frequency outside of a frequency band of the received CV-QKD signal 101. The method 900 further comprises a step of detecting 902 X and P quadrature values of a plurality of symbols of the CV-QKD signal 101 using the first oscillating signal 103 and the second oscillating signal 104. The method 900 of FIG. 9 may be carried out by the heterodyne receiver 100 of FIG. 1, FIG. 2, FIG. 3, or FIG: 5. In particular, the generating step 901 may be carried out by the local oscillator unit 102, while the detecting step 902 may be carried out by at least one detection unit 105.

An alternative method of another embodiment of the present invention (not shown) is also a method of receiving a CV-QKD signal 101. The alternative method comprises a step of generating an oscillating signal 603. The method further comprises a step of producing a filtered CV-QKD signal 606 by filtering out an image band 801 of the CV-QKD signal 601. Finally, the method comprises a step of detecting X and P quadrature values of a plurality of symbols of the filtered CV-QKD signal 606 using the oscillating signal 603. The method 900 may be carried out by the heterodyne receiver 600 shown in FIG. 6. In particular, the generating step may be carried out by the local oscillator unit 102, the filtering step may be carried out by the optical filter unit 604, and the detection step may be carried out by at least one detection unit 605.

In summary, the present invention provides various heterodyne receivers 100 and 600, and heterodyne receiving methods, which make CV-QKD procedure including heterodyne detection significantly more secure than with the conventional heterodyne receiver 1000 or receiving method. This is because the newly discovered image-band attack is effectively countered.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Heterodyne receiver (100) for receiving a Continuous-Variable Quantum Key Distribution, CV-QKD, signal (101), the receiver (100) comprising

   a local oscillator unit (102) configured to generate at least a first oscillating signal (103) and a second oscillating signal (104), at least one detection unit (105) configured to detect X and P quadrature values of a plurality of symbols of the CV-QKD signal (101) using the first oscillating signal (103) and the second oscillating signal (104), **characterized in that**
   the first oscillating signal (103) has a different phase than the second oscillating signal (104), and both oscillating signals (103, 104) have a frequency outside of a frequency band of the received CV-QKD signal (101),

wherein the heterodyne receiver (100) further comprises:

a first detection unit (105) configured to detect X and P quadrature values of each of the plurality of symbols using the first oscillating signal (103),
a second detection unit (105) configured to detect X and P quadrature values of each of the plurality of symbols using the second oscillating signal (104),

a signal combining unit (400) configured to generate, for each of the plurality of symbols:

a processed X quadrature value by subtracting the P quadrature value of the symbol detected by the second detection unit (105) from the X quadrature value of the symbol detected by the first detecting unit (105), and
a processed P quadrature value by adding the P quadrature value of the symbol detected by the first detection unit (105) to the X quadrature value of the symbol detected by the second detection unit (105), wherein the heterodyne receiver (100) is configured to obtain an upper bound on an excess noise for a signal band, wherein the heterodyne receiver (100) is configured to calculate an average of the different X and P quadrature values as an upper bound of a noise variance of CV-QKD information in the CV-QKD signal, wherein
the local oscillator unit (102) comprises a local oscillator (200) and a phase modulator (201) arranged between the local oscillator (200) and at least one detection unit (105), and
the phase modulator (201) is configured to modulate a phase of an output signal (202) of the local oscillator (200), wherein
the local oscillator unit (102) further comprises a beam splitter (300) to divide the output signal (202) of the local oscillator (200) to the first detection unit (105) as the first oscillating signal (103) and to the phase modulator (201), wherein
the phase modulator (201) is arranged between the beam splitter (300) and a second detection unit (105) and is configured to modulate the phase of the output signal (202) of the local oscillator (200) to produce the second oscillating signal (104), wherein
each detection unit (105) comprises two photodetectors (203), each configured to convert a received signal into a photocurrent (204), and
a further beam splitter (205) configured to receive the CV-QKD signal (101) and either the first or second oscillating signal (103, 104), and to divide the received signals to the two photodetectors (203), such that one photodetector (203) receives a sum of the CV-QKD signal and the first or second oscillating signal (103, 104), and the other photodetector (203) receives a difference between the CV-QKD signal (101) and the first or second oscillating signal (103, 104).

2. Heterodyne receiver (100) according to claim 1, configured to
randomly select the first set of symbols and/or the second set of symbols from the plurality of symbols.

3. Heterodyne receiver (100) according to claim 1 or 2, wherein
the plurality of symbols includes all symbols or a subset of all symbols of the CV-QKD signal (101).

4. Heterodyne receiver (100) according to one of the claims 1 to 3, configured to
randomly select the phase value of the first oscillating signal (103) and/or the phase value of the second oscillating signal (104), preferably from a subset of predetermined phase values.

5. Heterodyne receiver (100) according to claim 1 or 2, wherein
the phase modulator (201) is arranged between the local oscillator (200) and the detection unit (105) and is configured to modulate the phase of the output signal (202) of the local oscillator (200) to produce the first oscillating signal (103) and the second oscillating signal (104).

6. Heterodyne receiver (100) according to one of the claims 1 to 5, wherein
a phase difference between the first oscillating signal (103) and the second oscillating signal (104) is between 30-150° or 210°-330°, is preferably between 80-100° or 250-290°, and is more preferably 90° or 270°.

7. Method (900) of receiving a continuous-variable quantum key distribution, CV-QKD, signal (101), the method (900) comprising

generating (901) at least a first oscillating signal (103) and a second oscillating signal (104), and

detecting (902) X and P quadrature values of a plurality of symbols of the CV-QKD signal (101) using the first oscillating signal (103) and the second oscillating signal (104),
**characterized in that**
the first oscillating signal (103) has a different phase than the second oscillating signal (104), and both oscillating signals (103, 104) have a frequency outside of a frequency band of the received CV-QKD signal (101), wherein the method further comprises:

detecting X and P quadrature values of each of the plurality of symbols using the first oscillating signal (103),
detecting X and P quadrature values of each of the plurality of symbols using the second oscillating signal (104),
generating, for each of the plurality of symbols,
a processed X quadrature value by subtracting the P quadrature value of the symbol detected from the X quadrature value of the symbol detected, and
a processed P quadrature value by adding the P quadrature value of the symbol to the X quadrature value of the symbol, further comprising
obtaining an upper bound on an excess noise for a signal band, further comprising calculating an average of the different X and P quadrature values as an upper bound of a noise variance of CV-QKD information in the CV-QKD signal,
modulating a phase of an output signal (202) of a local oscillator (200), and dividing, by a beam splitter (300) , the output signal (202) of the local oscillator (200) to a first detection unit (105) as the first oscillating signal (103) and to a phase modulator (201) arranged between the beam splitter (300) and the second detection unit (105);
modulating, by the phase modulator (201) , the phase of the output signal (202) of the local oscillator (200) to produce the second oscillating signal (104) received by a second detection unit (105), and
receiving, by a further beam splitter (205), the CV-QKD signal (101) and either the first or second oscillating signal (103, 104), and dividing the received signals to two photodetectors (203) comprised by each detection unit (105), such that one photodetector (203) receives a sum of the CV-QKD signal and the first or second oscillating signal (103, 104), and the other photodetector (203) receives a difference between the CV-QKD signal (101) and the first or second oscillating signal (103, 104).

## Patentansprüche

1. Heterodyn-Empfänger (100) zum Empfangen eines "Continuous-Variable Quantum Key Distribution"-, CV-QKD-, Signals (101), wobei der Empfänger (100) folgende Elemente umfasst:

eine Lokaloszillatoreinheit (102), die dafür ausgelegt ist, mindestens ein erstes Schwingungssignal (103) und ein zweites Schwingungssignal (104) zu erzeugen, mindestens eine Erfassungseinheit (105), die dafür ausgelegt ist, X- und P-Quadraturwerte einer Vielzahl von Symbolen des CV-QKD-Signals (101) unter Verwendung des ersten Schwingungssignals (103) und des zweiten Schwingungssignals (104) zu erfassen,
**dadurch gekennzeichnet, dass**
das erste Schwingungssignal (103) eine andere Phase hat als das zweite Schwingungssignal (104) und beide Schwingungssignale (103, 104) eine Frequenz außerhalb eines Frequenzbandes des empfangenen CV-QKD-Signals (101) haben,
wobei der Heterodyn-Empfänger (100) ferner umfasst:

eine erste Erfassungseinheit (105), die dafür ausgelegt ist, X- und P-Quadraturwerte jedes der Vielzahl von Symbolen unter Verwendung des ersten Schwingungssignals (103) zu erfassen,
eine zweite Erfassungseinheit (105), die dafür ausgelegt ist, X- und P-Quadraturwerte jedes der Vielzahl von Symbolen unter Verwendung des zweiten Schwingungssignals (104) zu erfassen,

eine Signalkombinationseinheit (400), die dafür ausgelegt ist, für jedes der Vielzahl von Symbolen folgende Werte zu erzeugen:

einen verarbeiteten X-Quadraturwert durch Subtrahieren des P-Quadraturwertes des von der zweiten Erfassungseinheit (105) erfassten Symbols vom X-Quadraturwert des von der ersten Erfassungseinheit (105) erfassten Symbols, und
einen verarbeiteten P-Quadraturwert durch Addieren des P-Quadraturwertes des von der ersten Erfassungseinheit (105) erfassten Symbols zum X-Quadraturwert des von der zweiten Erfassungseinheit (105) erfassten Symbols, wobei der Heterodyn-Empfänger (100) dafür ausgelegt ist, eine Obergrenze für ein Überschussrauschen für ein Signalband zu erhalten, wobei der Heterodyn-Empfänger (100) dafür ausgelegt ist,

einen Mittelwert der verschiedenen X- und P-Quadraturwerte als Obergrenze einer Rauschvarianz von CV-QKD-Informationen im CV-QKD-Signal zu berechnen, wobei die Lokaloszillatoreinheit (102) einen Lokaloszillator (200) und einen Phasenmodulator (201) umfasst, der zwischen dem Lokaloszillator (200) und mindestens einer Erfassungseinheit (105) angeordnet ist, und

der Phasenmodulator (201) dafür ausgelegt ist, eine Phase eines Ausgangssignals (202) des Lokaloszillators (200) zu modulieren, wobei

die Lokaloszillatoreinheit (102) ferner einen Strahlteiler (300) zum Aufteilen des Ausgangssignals (202) des Lokaloszillators (200) auf die erste Erfassungseinheit (105) als das erste Schwingungssignal (103) und den Phasenmodulator (201) umfasst, wobei der Phasenmodulator (201) zwischen dem Strahlteiler (300) und einer zweiten Erfassungseinheit (105) angeordnet ist und dafür ausgelegt ist, die Phase des Ausgangssignals (202) des Lokaloszillators (200) zum Erzeugen des zweiten Schwingungssignals (104) zu modulieren, wobei jede Erfassungseinheit (105) zwei Photodetektoren (203) umfasst, die jeweils dafür ausgelegt sind, ein empfangenes Signal in einen Photostrom (204) umzuwandeln, und

einen weiteren Strahlteiler (205), der dafür ausgelegt ist, das CV-QKD-Signal (101) und entweder das erste oder das zweite Schwingungssignal (103, 104) zu empfangen und die empfangenen Signale auf die beiden Photodetektoren (203) aufzuteilen, derart, dass ein Photodetektor (203) eine Summe des CV-QKD-Signals und des ersten oder des zweiten Schwingungssignals (103, 104) empfängt und der andere Photodetektor (203) eine Differenz zwischen dem CV-QKD-Signal (101) und dem ersten oder dem zweiten Schwingungssignal (103, 104) empfängt.

2. Heterodyn-Empfänger (100) nach Anspruch 1, der dafür ausgelegt ist, den ersten Satz von Symbolen und/oder den zweiten Satz von Symbolen aus der Vielzahl von Symbolen zufällig auszuwählen.

3. Heterodyn-Empfänger (100) nach Anspruch 1 oder 2, wobei die Vielzahl von Symbolen alle Symbole oder einen Teilsatz aller Symbole des CV-QKD-Signals (101) beinhaltet.

4. Heterodyn-Empfänger (100) nach einem der Ansprüche 1 bis 3, der dafür ausgelegt ist, den Phasenwert des ersten Schwingungssignals (103) und/oder den Phasenwert des zweiten Schwingungssignals (104) zufällig auszuwählen, vorzugsweise aus einem Teilsatz von vorbestimmten Phasenwerten.

5. Heterodyn-Empfänger (100) nach Anspruch 1 oder 2, wobei der Phasenmodulator (201) zwischen dem Lokaloszillator (200) und der Erfassungseinheit (105) angeordnet ist und dafür ausgelegt ist, die Phase des Ausgangssignals (202) des Lokaloszillators (200) zum Erzeugen des ersten Schwingungssignals (103) und des zweiten Schwingungssignals (104) zu modulieren.

6. Heterodyn-Empfänger (100) nach einem der Ansprüche 1 bis 5, wobei eine Phasendifferenz zwischen dem ersten Schwingungssignal (103) und dem zweiten Schwingungssignal (104) zwischen 30-150° oder 210°-330°, vorzugsweise zwischen 80-100° oder 250-290°, und bevorzugter 90° oder 270° beträgt.

7. Verfahren (900) zum Empfangen eines "Continuous-Variable Quantum Key Distribution"-, CV-QKD-, Signals (101), wobei das Verfahren (900) folgende Vorgänge umfasst:

Erzeugen (901) mindestens eines ersten Schwingungssignals (103) und eines zweiten Schwingungssignals (104), und
Erfassen (902) von X- und P-Quadraturwerten einer Vielzahl von Symbolen des CV-QKD-Signals (101) unter Verwendung des ersten Schwingungssignals (103) und des zweiten Schwingungssignals (104),
**dadurch gekennzeichnet, dass**
das erste Schwingungssignal (103) eine andere Phase hat als das zweite Schwingungssignal (104) und beide Schwingungssignale (103, 104) eine Frequenz außerhalb eines Frequenzbandes des empfangenen CV-QKD-Signals (101) haben,
wobei das Verfahren ferner umfasst:

Erfassen von X- und P-Quadraturwerten jedes der Vielzahl von Symbolen unter Verwendung des ersten Schwingungssignals (103),

Erfassen von X- und P-Quadraturwerten jedes der Vielzahl von Symbolen unter Verwendung des zweiten Schwingungssignals (104),

Erzeugen, für jedes der Vielzahl von Symbolen,

eines verarbeiteten X-Quadraturwertes durch Subtrahieren des P-Quadraturwertes des erfassten Symbols vom X-Quadraturwert des erfassten Symbols, und

eines verarbeiteten P-Quadraturwertes durch Addieren des P-Quadraturwertes des Symbols zum X-Quadraturwert des Symbols, ferner umfassend Erhalten einer Obergrenze für ein Überschussrauschen für ein Signalband, ferner umfassend das Berechnen eines Mittelwertes der verschiedenen X- und P-Quadraturwerte als Obergrenze einer Rauschvarianz von CV-QKD-Informationen im CV-QKD-Signal,

Modulieren einer Phase eines Ausgangssignals (202) eines Lokaloszillators (200) und

Aufteilen, durch einen Strahlteiler (300), des Ausgangssignals (202) des Lokaloszillators (200) auf eine erste Erfassungseinheit (105) als das erste Schwingungssignal (103) und einen Phasenmodulator (201), der zwischen dem Strahlteiler (300) und der zweiten Erfassungseinheit (105) angeordnet ist;

Modulieren, durch den Phasenmodulator (201), der Phase des Ausgangssignals (202) des Lokaloszillators (200) zum Erzeugen des zweiten Schwingungssignals (104), das von einer zweiten Erfassungseinheit (105) empfangen wird, und

Empfangen, durch einen weiteren Strahlteiler (205), des CV-QKD-Signals (101) und entweder des ersten oder des zweiten Schwingungssignals (103, 104) und Aufteilen der empfangenen Signale auf zwei Photodetektoren (203), die von jeder Erfassungseinheit (105) umfasst sind, derart, dass ein Photodetektor (203) eine Summe des CV-QKD-Signals und des ersten oder des zweiten Schwingungssignals (103, 104) empfängt und der andere Photodetektor (203) eine Differenz zwischen dem CV-QKD-Signal (101) und dem ersten oder dem zweiten Schwingungssignal (103, 104) empfängt.

## Revendications

1. Récepteur hétérodyne (100) destiné à recevoir un signal de distribution quantique de clés à variables continues, CV-QKD (101), le récepteur (100) comprenant une unité d'oscillateur local (102) configurée pour générer au moins un premier signal oscillant (103) et un second signal oscillant (104), au moins une unité de détection (105) configurée pour détecter des valeurs de quadrature X et P d'une pluralité de symboles du signal CV-QKD (101) à l'aide du premier signal oscillant (103) et du second signal oscillant (104), **caractérisé en ce que** le premier signal oscillant (103) a une phase différente du second signal oscillant (104), et les deux signaux oscillants (103, 104) ont une fréquence située en-dehors d'une bande de fréquences du signal CV-QKD (101) reçu,

dans lequel le récepteur hétérodyne (100) comprend en outre :

une première unité de détection (105) configurée pour détecter des valeurs de quadrature X et P de chacun de la pluralité de symboles à l'aide du premier signal oscillant (103),
une seconde unité de détection (105) configurée pour détecter des valeurs de quadrature X et P de chacun de la pluralité de symboles à l'aide du second signal oscillant (104),

une unité de combinaison de signaux (400) configurée pour générer, pour chacun de la pluralité de symboles :

une valeur de quadrature X traitée en soustrayant la valeur de quadrature P du symbole détecté par la seconde unité de détection (105) de la valeur de quadrature X du symbole détecté par la première unité de détection (105), et
une valeur de quadrature P traitée en ajoutant la valeur de quadrature P du symbole détecté par la première unité de détection (105) à la valeur de quadrature X du symbole détecté par la seconde unité de détection (105), dans lequel le récepteur hétérodyne (100) est configuré pour obtenir une limite supérieure sur un bruit en excès pour une bande de signal, dans lequel le récepteur hétérodyne (100) est configuré pour calculer une moyenne des différentes valeurs de quadrature X et P comme limite supérieure d'une variance de bruit d'informations CV-QKD dans le signal CV-QKD, dans lequel
l'unité d'oscillateur local (102) comprend un oscillateur local (200) et un modulateur de phase (201) agencé entre l'oscillateur local (200) et au moins une unité de détection (105), et
le modulateur de phase (201) est configuré pour moduler une phase d'un signal de sortie (202) de l'oscillateur local (200), dans lequel
l'unité d'oscillateur local (102) comprend en outre un diviseur de faisceau (300) pour diviser le signal de sortie (202) de l'oscillateur local (200) vers la première unité de détection (105) comme premier signal oscillant (103) et vers le modulateur de phase (201), dans lequel

le modulateur de phase (201) est agencé entre le diviseur de faisceau (300) et une seconde unité de détection (105) et est configuré pour moduler la phase du signal de sortie (202) de l'oscillateur local (200) pour produire le second signal oscillant (104), dans lequel

chaque unité de détection (105) comprend deux photodétecteurs (203), configurés chacun pour convertir un signal reçu en un photocourant (204), et

un autre diviseur de faisceau (205) configuré pour recevoir le signal CV-QKD (101) et soit le premier, soit le second signal oscillant (103, 104), et pour diviser les signaux reçus vers les deux photodétecteurs (203), de telle sorte qu'un photodétecteur (203) reçoit une somme du signal CV-QKD et du premier ou second signal oscillant (103, 104), et l'autre photodétecteur (203) reçoit une différence entre le signal CV-QKD (101) et le premier ou second signal oscillant (103, 104).

2. Récepteur hétérodyne (100) selon la revendication 1, configuré pour sélectionner aléatoirement le premier ensemble de symboles et/ou le second ensemble de symboles parmi la pluralité de symboles.

3. Récepteur hétérodyne (100) selon la revendication 1 ou 2, dans lequel la pluralité de symboles inclut tous les symboles ou un sous-ensemble de tous les symboles du signal CV-QKD (101).

4. Récepteur hétérodyne (100) selon l'une des revendications 1 à 3, configuré pour sélectionner aléatoirement la valeur de phase du premier signal oscillant (103) et/ou la valeur de phase du second signal oscillant (104), de préférence parmi un sous-ensemble de valeurs de phase prédéterminées.

5. Récepteur hétérodyne (100) selon la revendication 1 ou 2, dans lequel le modulateur de phase (201) est agencé entre l'oscillateur local (200) et l'unité de détection (105) et est configuré pour moduler la phase du signal de sortie (202) de l'oscillateur local (200) pour produire le premier signal oscillant (103) et le second signal oscillant (104).

6. Récepteur hétérodyne (100) selon l'une des revendications 1 à 5, dans lequel une différence de phase entre le premier signal oscillant (103) et le second signal oscillant (104) est comprise entre 30° et 150° ou 210° et 330°, est de préférence comprise entre 80° et 100° ou 250° et 290°, et est plus préférablement de 90° ou 270°.

7. Procédé (900) de réception d'un signal de distribution quantique de clés à variables continues, CV-QKD (101), le procédé (900) comprenant

la génération (901) d'au moins un premier signal oscillant (103) et un second signal oscillant (104), et
la détection (902) de valeurs de quadrature X et P d'une pluralité de symboles du signal CV-QKD (101) à l'aide du premier signal oscillant (103) et du second signal oscillant (104),
**caractérisé en ce que**
le premier signal oscillant (103) a une phase différente du second signal oscillant (104), et les deux signaux oscillants (103, 104) ont une fréquence située en-dehors d'une bande de fréquences du signal CV-QKD (101) reçu, dans lequel le procédé comprend en outre :

la détection de valeurs de quadrature X et P de chacun de la pluralité de symboles à l'aide du premier signal oscillant (103),
la détection de valeurs de quadrature X et P de chacun de la pluralité de symboles à l'aide du second signal oscillant (104),
la génération, pour chacun de la pluralité de symboles,
d'une valeur de quadrature X traitée en soustrayant la valeur de quadrature P du symbole détecté de la valeur de quadrature X du symbole détecté, et
d'une valeur de quadrature P traitée en ajoutant la valeur de quadrature P du symbole à la valeur de quadrature X du symbole, comprenant en outre l'obtention d'une limite supérieure sur un bruit en excès pour une bande de signal,
comprenant en outre le calcul d'une moyenne des différentes valeurs de quadrature X et P comme limite supérieure d'une variance de bruit d'informations CV-QKD dans le signal CV-QKD,
la modulation d'une phase d'un signal de sortie (202) d'un oscillateur local (200), et la division, par un diviseur de faisceau (300), du signal de sortie (202) de l'oscillateur local (200) vers une première unité de détection (105) comme premier signal oscillant (103) et vers un modulateur de phase (201) agencé entre le diviseur de faisceau (300) et la seconde unité de détection (105) ;
la modulation, par le modulateur de phase (201), de la phase du signal de sortie (202) de l'oscillateur local (200) pour produire le second signal oscillant (104) reçu par une seconde unité de détection (105), et la réception, par un autre diviseur de faisceau (205), du signal CV-QKD (101) et soit du premier, soit du second signal oscillant (103, 104), et la division des signaux reçus vers deux photodétecteurs (203) compris par chaque unité de détection (105), de telle sorte qu'un photodétecteur (203) reçoit une somme du signal CV-QKD et du premier ou second signal oscillant (103, 104), et l'autre photodétecteur (203) reçoit une différence entre le signal CV-QKD (101) et le premier ou second signal oscillant (103, 104).

$$\underline{100}$$

101

105

$X_{\Phi 1}$ and/or $X_{\Phi 2}$

$P_{\Phi 1}$ and/or $P_{\Phi 2}$

103

104

102

**FIG. 1**

FIG. 2

EP 3 656 078 B1

FIG. 3

EP 3 656 078 B1

$X_{0°}$

$P_{0°}$

$X_{90°}$

$P_{90°}$

400

$X_{QKD}$

$P_{QKD}$

**FIG. 4**

FIG. 5

**FIG. 6**

EP 3 656 078 B1

**FIG. 7**

EP 3 656 078 B1

Bandpass filter

802

801   image        signal

800

0        $\omega'_C$     $\omega_{LO}$   $\omega_C$

**FIG. 8**

signal

800

0        $\omega'_C$     $\omega_{LO}$   $\omega_C$

EP 3 656 078 B1

$\underline{900}$

901 — Generate at least a first oscillating signal and a second oscillating signal, wherein the first oscillating signal has a different phase than the second oscillating signal, and both oscillating signals have a frequency outside of a frequency band of a received CV-QKD signal.

902 — Detect X and P quadrature values of a plurality of symbols of the CV-QKD signal using the first oscillating signal and the second oscillating signal.

**FIG. 9**

**FIG. 10**

EP 3 656 078 B1

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BING QI et al.** Generating the Local Oscillator 'Locally' in Continuous-Variable Quantum Key Distribution Based on Coherent Detection. *PHYSICAL REVIEW X,* 01 October 2015, vol. 5 (4
- **ADRIEN MARIE et al.** Self-coherent phase reference sharing for continuous-variable quantum key distribution. CORNELL UNIVERSITY LIBRARY, 12 May 2016

- **FABIAN LAUDENBACH et al.** Continuous-Variable Quantum Key Distribution with Gaussian Modulation-The Theory of Practical Implementations. CORNELL UNIVERSITY LIBRARY, 27 March 2017